# FASCICULE DE BREVET EUROPEEN

(11) **EP 0 451 019 B1**
(45) Date de publication et mention de la délivrance du brevet: **01.06.1994**
(21) Numéro de dépôt: 91400816.4
(22) Date de dépôt: 26.03.1991
(51) Int. Cl.: B60J 1/17

(54) **Dispositif de liaison entre un profilé de bas de vitre de porte de véhicule et un profilé de coulissement de lève-vitre, et porte de véhicule équipée de ce dispositif**
Verbindungseinrichtung zwischen einem unteren Profil des Fahrzeugtürfensters und einem beweglichen Profil des Fensterhebers sowie eine mit dieser Einrichtung ausgestattete Fahrzeugtür
Connecting device between a lower profile of the vehicle door window and a ajustble profile of the window lifter, and a vehicle door equipped with this device

(30) Priorité: 02.04.1990 FR 9004189
(43) Date de publication de la demande: 09.10.1991
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Guillaume, Nicholas, F-45000 Orléans (FR); Becceril, Philippe, F-45150 Darvoy (FR)
(74) Mandataire: Martin, Jean-Paul

(56) Documents cités:
- FR-A- 2 600 708
- PATENT ABSTRACTS OF JAPAN vol. 7, no. 104 (M-212)(1249) 06 mai 1983,
- & JP-A-58 26623 (HORI GLASS) 17 février 1983,
- PATENT ABSTRACTS OF JAPAN vol. 7, no. 104 (M-212)(1249) 06 mai 1983,& JP-A-58 26624 (HORI GLASS) 17 février 1983,

## Description

La présente invention a pour objet un dispositif de liaison entre un profilé de bas de vitre de porte de véhicule et un profilé de coulissement de lève-vitre, comportant des moyens de fixation du second profilé sur le premier. A titre complémentaire l'invention concerne également une porte de véhicule équipée de ce dispositif.

Actuellement le montage s'effectue de la manière suivante :
- l'opérateur met en place la vitre équipée de son profilé de bas de vitre (appelé aussi profilé de chaussage) sur lequel deux pattes sont fixées, des trous taraudés étant perçés dans ces pattes;
- l'opérateur immobilise ensuite la vitre en position haute, par un moyen quelconque;
- l'opérateur introduit le lève-vitre muni de son profilé de coulissement dans la porte;
- l'opérateur recentre ou réajuste la position du profilé de coulissement par rapport à celle du profilé de bas de vitre, de manière à faire coïncider deux trous formés dans le profilé de coulissement, avec les deux trous taraudés correspondants des pattes fixées au profilé de bas de vitre;
- enfin l'opérateur met en place deux vis (ou tous autres organes analogues tels que des rivets) pour lier rigidement les deux profilés, par l'intermédiaire des deux pattes.

Ce mode d'assemblage présente l'inconvénient résidant dans le fait que la mise en coïncidence des trous de fixation des deux profilés nécessite l'intervention manuelle d'un opérateur, donc une augmentation du temps d'assemblage des pièces sur la chaîne de montage. En effet, la technique d'assemblage utilisée jusqu'à présent ne permet pas d'exécuter automatiquement la liaison entre le lève-vitre et la vitre.

L'invention a donc pour but de permettre d'exécuter automatiquement le centrage du profilé de lève-vitre par rapport au profilé de bas de vitre.

Suivant l'invention, le dispositif de liaison entre le profilé de bas de vitre et le profilé de coulissement de lève-vitre comprend des moyens de centrage automatique du profilé de coulissement sur le profilé de bas de vitre.

Suivant un mode de réalisation de l'invention, les moyens de centrage comportent une pièce mâle solidaire du profilé de coulissement et une pièce femelle solidaire du profilé de bas de vitre, la pièce femelle portant des rampes de guidage de la pénétration de la pièce mâle dans la pièce femelle lors de l'assemblage du profilé de coulissement au profilé de bas de vitre.

Suivant une forme de réalisation de l'invention, la pièce femelle est une plaquette dans laquelle est ménagée une encoche ayant sensiblement un profil en V, dont les bords forment lesdites rampes de guidage de la pièce mâle, laquelle est formée par exemple par une patte découpée dans le profilé de coulissement et faisant saillie latéralement de celui-ci, afin de pouvoir glisser sur l'une des rampes de l'encoche en V ouverte vers le bas lors de la mise en place du profilé de coulissement.

Suivant une autre particularité de l'invention, des dégagements latéraux sont ménagés sur le profilé de coulissement, et ces dégagements sont délimités d'un côté au moins par une rampe inclinée de guidage d'une plaquette correspondante du profilé de bas de vitre.

Dans ces conditions, le positionnement du profilé de coulissement et de sa patte ayant été préalablement réglé, de manière connue en soi, à l'aide d'une butée du profilé coopérant avec un galet du lève-vitre, la patte glisse sur la rampe lors du relèvement du profilé de coulissement, et vient en butée contre le fond de l'encoche. Les deux paires de trous de fixation des deux profilés sont alors en parfaite coïncidence, et l'opérateur peut mettre en place les vis de fixation. Ainsi la mise en place du profilé de coulissement en parfaite coïncidence avec les trous du profilé de bas de vitre peut être exécutée automatiquement par un robot, ce qui diminue le temps nécessaire à l'assemblage.

D'autres particularités et avantages de l'invention apparaîtront au cours de la description qui va suivre, faite en référence aux dessins annexés qui en illustrent deux formes de réalisation à titre d'exemples non limitatifs.

La figure 1 est une vue en perspective simplifiée d'un lève-vitre et d'une vitre avant assemblage de leurs profilés respectifs.

La figure 2 est une vue en perspective partielle à échelle agrandie par rapport à la Fig.1 d'une première forme de réalisation des deux profilés et de leur dispositif de liaison, avant assemblage.

La figure 3 est une vue en perspective à échelle à nouveau agrandie des deux profilés de la Fig.2 immédiatement avant leur assemblage.

La figure 4 est une vue en perspective des deux profilés de la Fig.3 dans leur position assemblée immédiatement avant pose des vis de fixation.

La figure 5 est une vue en perspective analogue à la Fig.3 des deux profilés équipés d'un dispositif de liaison selon une seconde forme de réalisation de l'invention.

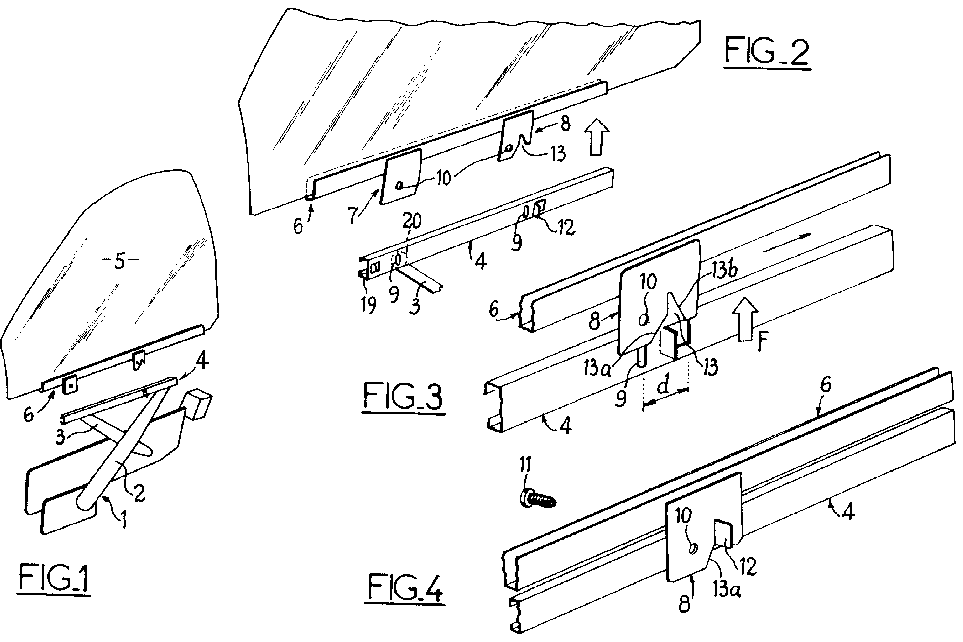

On voit à la Fig.1 un lève-vitre 1, du type à bras 2, 3 dont les extrémités supérieures portent un profilé 4 de coulissement, destiné à recevoir des galets non représentés, de manière connue en soi, ainsi qu'une vitre 5 dont le bord inférieur horizontal est équipé d'un profilé 6 de bas de vitre, fixé à cette dernière.

Au bord inférieur du profilé 6 de bas de vitre sont fixées deux pattes 7, 8, perçées chacune d'un trou taraudé 10. Corrélativement, le profilé de coulissement 4 est perçé de deux trous 9 distants d'un intervalle égal à celui des trous 10, de telle sorte que les deux profilés 4 et 6 peuvent être assemblés grâce à des organes appropriés tels que des vis 11 (Fig.4) traversant les trous 9 et 10, lors de l'assemblage des éléments de la porte sur la chaîne de montage.

Le système de liaison entre les deux profilés 4 et 6 comprend des moyens de centrage automatique du profilé 4 sur le profilé 6, qui dans l'exemple illustré aux Fig.2 à 4 sont constitués de la manière suivante.

Le profilé de coulissement 4 comporte une pièce mâle constituée par une patte 12 découpée dans la paroi du profilé 4 et repliée latéralement à angle droit. De son côté le profilé de bas de vitre 6 porte une pièce femelle constituée dans cet exemple par l'une des pattes 8 dans le bord inférieur de laquelle a été ménagée une encoche 13 ayant sensiblement un profil en V renversé. Les bords 13a, 13b de cette encoche forment des rampes de guidage de la patte saillante 12 et donc du profilé de coulissement 4, lorsque celui-ci est déplacé vers le haut, comme indiqué par la flèche F. Les rampes de guidage 13a et 13b peuvent du reste ne pas être identiques, comme représenté aux Fig.2 et 3, où l'on voit que la rampe de gauche 13a est en deux sections : la première section, raccordée au bord inférieur horizontal de la patte 8 a une inclinaison sur l'horizontale inférieure à celle de la seconde section qui se termine par le sommet du V, afin de faciliter le glissement de la patte 12 sur la première section de la rampe 13a.

Le profilé 4 est pourvu, de manière connue en soi, à l'une de ses extrémités, d'une butée intérieure 19 adaptée pour coopérer avec un galet 20 porté par l'un des bras 2, 3, par exemple le bras 3, afin de prérégler la position du profilé 4 par rapport à celle du profilé 6.

L'assemblage des deux profilés 4 et 6 peut se faire automatiquement de manière très simple : le V formé par l'encoche 13 étant ouvert vers le bas, et le profilé 4 étant d'abord positionné comme indiqué ci-dessus, par venue du galet 20 au contact de la butée d'arrêt 19, sa patte saillante 12 se trouve à l'intérieur d'une zone de largeur d égale à la distance entre les bords opposés de l'encoche 13; le profilé 4 est alors déplacé vers le haut (flèche F). De ce fait, le glissement de la patte 12 sur les deux sections successives de la rampe 13a, ou sur la seconde rampe 13b, amène la patte 12 en butée dans le fond de l'encoche 13, et par la même positionne le profilé 4 de telle manière que ses trous 9 soient en coïncidence exacte avec les trous taraudés 10 du profilé 6 (Fig.4). Il ne reste plus alors à l'opérateur qu'à mettre en place les vis 11 (ou éventuellement d'autres organes de fixation) dans les trous 9 et 10.

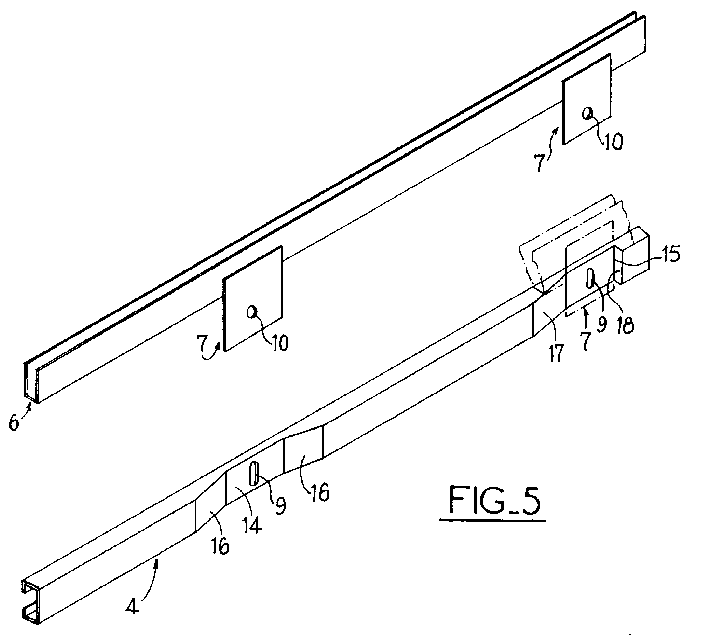

Dans le second mode de réalisation de l'invention, représenté à la Fig.5, le profilé de bas de vitre 6 porte deux pattes identiques 7, tandis que dans le profilé de coulissement 4 sont ménagés deux dégagements latéraux 14 et 15. Le dégagement 14 est formé dans la zone du profilé 4 correspondant à la position de la plaquette 7 de gauche lorsque les deux profilés 4 et 6 sont assemblés, tandis que le dégagement 15 est formé à l'extrémité du profilé 4 situé en regard de la seconde plaquette 7. Le dégagement 14 est délimité de chaque côté, dans le sens longitudinal du profilé 4, par deux rampes 16 inclinées l'une vers l'autre, symétriques par rapport à un plan transversal passant par le milieu du fond du dégagement 14 reliant ces rampes 16. Le dégagement terminal 15 est délimité d'un côté par une rampe inclinée 17, et de l'autre par une patte saillante 18, repliée à angle droit et pouvant former une butée d'arrêt pour la plaquette correspondante 7.

L'assemblage des deux profilés 4 et 6 se fait de la manière suivante : le profilé 6 étant maintenu fixe, on relève le profilé 4 de manière que les dégagements 14, 15 viennent sensiblement se placer en regard des pattes 7. En raison du décalage dans le sens longitudinal (supposé vers la gauche sur le dessin) entre les pattes 7 et les dégagements 14, 15, les pattes 7 glissent sur les rampes 16 et 17 jusqu'à ce qu'elles viennent en appui sur les fonds des dégagements 14, 15, ce déplacement longitudinal du profilé 4 étant arrêté par la butée constituée par la patte 18, et lorsque les pattes 7 viennent en appui sur les plats constitués par les dégagements 14 et 15. A ce moment, les trous 9 et 10 sont en parfaite coïncidence et l'opérateur peut mettre en place les vis 11.

L'invention n'est pas limitée aux modes de réalisation décrits et peut comporter des variantes d'exécution. Ainsi il est évident que les profils des rampes 13a et 13b peuvent varier, dans la mesure où ces rampes conservent leur fonction de guidage du déplacement du profilé 4 par rapport au profilé 6. L'invention est applicable aux différents types existants de lève-vitre : lève-vitre à bras (Fig.1), à câble-crémaillère ou à câble.

## Revendications

1. Dispositif de liaison entre un profilé (6) de bas de vitre de porte de véhicule et un profilé (4) de coulissement de lève-vitre (1), comportant des moyens de fixation du second profilé (4) sur le premier (6), dispositif caractérisé en ce qu'il comprend des moyens (12, 13) de centrage automatique du profilé de coulissement (4) sur le profilé (6) de bas de vitre.

2. Dispositif selon la revendication 1, caractérisé en ce que les moyens de centrage comportent une pièce mâle (12) solidaire du profilé de coulissement (4) et une pièce femelle (8) solidaire du profilé (6) de bas de vitre, la pièce femelle portant des rampes (13a, 13b) de guidage de la pénétration de la pièce mâle (12) dans la pièce femelle (8) lors de l'assemblage du profilé de coulissement au profilé de bas de vitre.

3. Dispositif selon la revendication 2, caractérisé en ce que la pièce femelle est une plaquette (8) dans laquelle est ménagée une encoche (13) ayant sensiblement un profil en V, dont les bords (13a, 13b) forment lesdites rampes de guidage de la pièce mâle (12), laquelle est formée par exemple par une patte découpée dans le profilé de coulissement (4) et faisant saillie latéralement de celui-ci, afin de pouvoir glisser sur l'une (13a ou 13b) des rampes de l'encoche (13) en V ouverte vers le bas lors de la mise en place du profilé (4) de coulissement.

4. Dispositif selon la revendication 1, dans lequel le profilé (6) de bas de vitre porte des plaquettes (7) percées de trous (10) pour recevoir des éléments (11) d'assemblage des deux profilés (4, 6), caractérisé en ce que sur le profilé (4) de coulissement sont ménagés des dégagements latéraux (14, 15) d'appui des plaquettes (7), délimités d'un côté au moins par un rampe inclinée (16, 17) de guidage d'une plaquette (7) correspondante du profilé (6) de bas de vitre.

5. Dispositif selon la revendication 4, caractérisé en ce que l'un (14) des dégagements (14, 15) est délimité sur son second côté, par une seconde rampe (16) de guidage inclinée, tandis que le second dégagement (15) est délimité du côté opposé à sa rampe de guidage (17) par une patte saillante (18) formant butée d'arrêt de la plaquette correspondante (7), lorsque cette dernière vient en appui contre le fond du dégagement (15).

6. Porte de véhicule automobile comportant un lève-vitre (1) muni d'un profilé (4) de coulissement destiné à être fixé sur un profilé (6) de bas de vitre, caractérisée en ce qu'elle comprend un dispositif de liaison entre le profilé de bas de vitre et le profilé de coulissement conforme à l'une des revendications 1 à 5.

## Patentansprüche

1. Verbindungseinrichtung zwischen einem unteren Profil (6) des Fahrzeugtürfensters und einem beweglichen Profil (4) des Fensterhebers (1), bestehend aus Befestigungsmitteln des zweiten Profils (4) auf dem ersten Profil (6),
**dadurch gekennzeichnet**, daß sie automatische Zentriermittel (12, 13) des beweglichen Profils (4) auf das untere Profil (6) des Türfensters aufweist.

2. Verbindungseinrichtung nach Anspruch 1,
**dadurch gekennzeichnet**, daß die Zentriermittel ein mit dem beweglichen Profil (4) fest verbundenes Zentrierteil (12) sowie ein mit dem unteren Profil (6) des Türfensters fest verbundenes Aufnahmeteil (8) besitzen, wobei das Aufnahmeteil (8) Führungsschrägen (13a, 13b) zur Einführung des Zentrierteils (12) in das Aufnahmeteil (8) aufnimmt, wenn das bewegliche Profil mit dem unteren Türfensterprofil zusammengebaut wird.

3. Verbindungseinrichtung nach Anspruch 2,
**dadurch gekennzeichnet,** daß das Aufnahmeteil aus einer Platte (8) mit einer Aussparung (13) besteht, welche ein V-ähnliches Profil besitzt, dessen Ränder (13a, 13b) die besagten Führungsschrägen des Zentrierteils (12) bilden, welche zum Beispiel aus einer in dem beweglichen Profil (4) ausgestanzten Lasche gebildet ist und seitlich nach außen einen Vorsprung aufweist, um auf eine der beiden Schrägen (13a, bzw. 13b) der nach unten offenen V-Aussparung (13) beim Einlegen des beweglichen Profils (4) gleiten zu können.

4. Verbindungseinrichtung nach Anspruch 1, in dem das untere Profil (6) des Fahrzeugtürfensters mit Lochungen (10) versehene Platten (7) zur Aufnahme von Montierelementen (11) der beiden Profile (4, 6) trägt,
**dadurch gekennzeichnet,** daß seitliche Ausnehmungen (14, 15) zur Aufnahme der Platten (7) auf dem beweglichen Profil ausgebaut sind, welche auf mindestens einer Seite durch eine Führungsschräge (16, 17) für die entsprechende Platte des unteren Profils (6) des Fahrzeugtürfensters abgegrenzt ist.

5. Verbindungseinrichtung nach Anspruch 4,
**dadurch gekennzeichnet**, daß eine (14) dieser Ausnehmungen (14, 15) auf ihrer zweiten Seite durch eine zweite Schräge (16) abgegrenzt ist, während die zweite Ausnehmung (15) auf der ihrer Führungsschräge (17) gegenüberliegenden Seite durch einen nach außen stehenden überhang (18) abgegrenzt ist, der einen Anschlagpuffer für die entsprechende Platte (7) bildet, wenn die letztere gegen den Boden dieser Ausnehmung (15) anschlägt.

6. Fahrzeugtür bestehend aus einem Fensterheber (1), der mit einem beweglichen Profil (4) versehen ist, das auf einem unteren Fensterprofil (6) befestigt wird,
**dadurch gekennzeichnet,** daß sie eine verbindungseinrichtung zwischen dem unteren Profil und einem beweglichen Profil entsprechend einem der Ansprüche 1 bis 5 aufweist.

## Claims

1. Device for connecting a bottom window section (6) of a vehicle door to a sliding section (5) of a window lift (1), possessing means for fastening the second section (4) to the first (6), the device being characterised in that it comprises means (12,13) for the automatic centring of the sliding section (4) on the bottom window section (6).

2. Device according to claim 1, characterised in that the centring means possess a male part (12) connected with the sliding section (4) and a female part (8) connected with the bottom window section (6), the female part having ramps (13a,13b) for guiding the penetration of the male part (12) into the female part (8) when joining the sliding section to the bottom window section.

3. Device according to claim 2, characterised in that the female part is a plate (8), in which a notch (13) having a substantially V-shaped profile is made, the edges (13a,13b) of which form the said guiding ramps for the male part (12), which is formed, for example, by a tab cut out of the sliding section (4) and projecting laterally from the latter, in order to be able to slide on one (13a or 13b) of the ramps of the downwardly open V-shaped notch (13) when the sliding section (4) is put in place.

4. Device according to claim 1, in which the bottom window section (4) carries plates (7)-pierced with holes (10) for receiving elements (11) for the assembly of the two sections (4,6), characterised in that in the sliding section (4) are formed lateral recesses (14,15) for supporting the plates (7), the said recesses being bounded on at least one side by an inclined ramp (16,17) for guiding a corresponding plate (7) of the bottom window section (6).

5. Device according to claim 4, characterised in that one (14) of the recesses (14,15) is bounded on its second side by a second inclined guidtng ramp (16), whereas the second recess (15) is bounded on the side opposite its guiding ramp (17) by a projecting tab (18) forming a limit stop for the corresponding plate (7), when the latter comes to bear against the back of the recess (15).

6. Motor vehicle door possessing a window lift (1) provided with a sliding section (4) intended to be fastened to a bottom window section (6), characterised in that it comprises a device for connecting the bottom window section to the sliding section in accordance with one of claims 1 to 5.
